# EUROPÄISCHE PATENTSCHRIFT

(11) **EP 2 915 194 B1**
(45) Veröffentlichungstag und Bekanntmachung des Hinweises auf die Patenterteilung: **15.03.2017**
(21) Anmeldenummer: 13782968.5
(22) Anmeldetag: 17.10.2013
(51) Int. Cl.: H01L 31/042, F24J 2/52

(54) **BEFESTIGER FÜR SOLARMODULE**
FASTENER FOR SOLAR MODULES
DISPOSITIF DE FIXATION POUR MODULES SOLAIRES

(30) Priorität: 31.10.2012 DE 102012110433
(43) Veröffentlichungstag der Anmeldung: 09.09.2015
(73) Patentinhaber: fischerwerke GmbH & Co. KG, 72178 Waldachtal (DE)
(72) Erfinder: MAZZUCATO, Federico, I-35020 Legnaro (PD) (IT)
(74) Vertreter: Suchy, Ulrich Johannes
(86) Internationale Anmeldenummer: PCT/EP2013/003123
(87) Internationale Veröffentlichungsnummer: WO 2014/067623

(56) Entgegenhaltungen:
- WO-A1-2009/091238
- DE-A1- 10 233 973
- DE-A1-102006 025 036

## Beschreibung

Die Erfindung betrifft einen Befestiger zur Befestigung von Solarmodulen, die auch Solarpanele genannt werden, auf Montageschienen mit den Merkmalen des Oberbegriffs des Anspruchs 1. Die Offenlegungsschriften DE 10 2006 025 036 A1 und DE 102 33 973 A1 offenbaren einen solchen Befestiger.

Die Offenlegungsschrift DE 10 2006 000 089 A1 offenbart einen Befestiger mit einer Pratze, die mit einer Schraube mit einer Hammerkopfmutter verbunden ist. Die Pratze weist zwei parallele, gegenüberliegende, leistenförmige und miteinander einstückige Auflagen auf, die auf Ränder zweier angrenzender Solarmodule aufgelegt werden, so dass mit der Schraube, die sich zwischen den Auflagen befindet, die Solarmodule gegen die Montageschiene gespannt werden können, was als Niederspannen der Solarmodule auf die Montageschiene bezeichnet werden kann. Die Schraube befindet sich in einem Zwischenraum zwischen den beiden Solarmodulen. Die Hammerkopfmutter, in die die Schraube eingeschraubt ist, wird zum Einbringen in die Montageschiene längs zu dieser ausgerichtet, in sie eingebracht und durch eine Drehung um 90° in Hintergriff in der Montageschiene gebracht, so dass mit der Schraube die Pratze in Richtung der Montageschiene gezogen und die Solarmodule gegen die Montageschiene gespannt werden können. Um die Hammerkopfmutter in der Montageschiene drehen zu können, weist der bekannte Befestiger eine Schraubenfeder auf, die auf einem Schaft der Schraube aufgenommen ist und deren Enden mit der Hammerkopfmutter und der Pratze in Eingriff stehen, so dass mit der Pratze über die Schraubenfeder die Hammerkopfmutter in der Montageschiene gedreht werden kann. Zum Niederspannen nur eines Solarmoduls auf einer Seite des Befestigers weist dieser eine Pratze mit einer Auflage auf einer Seite und eine Stütze auf einer gegenüberliegenden Seite auf. In montiertem Zustand liegt die Auflage auf der einen Seite der Pratze auf dem Solarmodul auf, die Stütze auf der anderen Seite der Pratze stützt sich auf der Montageschiene ab. Die Schraube, die die Pratze zur Montageschiene spannt, befindet sich dazwischen. Die Stütze verhindert, dass die Pratze beim Spannen vom Solarmodul weg kippt.

Die Montageschiene ist üblicherweise ein Hohlprofil mit einem Längsschlitz in einer Längsseite, an den sich seitlich Wangen anschließen. Durch den Längsschlitz ist, wie bereits beschrieben, eine Hammerkopfmutter oder allgemein ein Hammerkopfelement in die Montageschiene einbringbar und durch Drehung in Hintergriff in der Montageschiene unter den seitlich an den Längsschlitz angrenzenden Wangen bringbar. Typischerweise weisen Montageschienen einen quadratischen oder rechteckigen Querschnitt auf. Zur Befestigung von Solarmodulen werden solche Montageschienen in einer Ebene parallel und mit Abstand nebeneinander, ggf. auch über Kreuz, angeordnet, die Solarmodule aufgelegt und mit Befestigern an ihren Rändern auf die Montageschiene gespannt und dadurch befestigt.

Der bekannte Befestiger benötigt zwei verschiedene Pratzen für die Befestigung zweier aneinander angrenzender Solarmodule und zur Befestigung nur eines Solarmoduls auf einer Seite des Befestigers.

Einen weiteren Befestiger offenbart die internationale Patentanmeldung WO 2009/091 238 A1. Dieser Befestiger weist einen Kopf mit einem Mittelloch und einem Hohlschaft an einer ebenen Unterseite des Kopfs auf. Eine Oberseite des Kopfs ist sphärisch und weist auf einer Seite des Hohlschafts eine ebene Abflachung parallel zu einer Mittelachse des Befestigers auf. In Draufsicht hat der Kopf des bekannten Befestigers die Form eines Kreissegments, das größer als ein Halbkreis ist. Der Kopf weist einen kreisbogenförmigen Rand auf, der sich über mehr als einen Halbkreis erstreckt und von einer Kreissehne geschlossen wird. Die Befestigung des Kopfs des bekannten Befestigers erfolgt mit einer durchgesteckten Schraube, die in eine Hammerkopfmutter eingeschraubt ist, welche sich wie bereits beschrieben in eine Montageschiene einbringen und durch eine Drehung um 90° in Hintergriff in der Montageschiene bringen lässt. Zur Befestigung zweiter Solarmodule wird der Kopf des bekannten Befestigers so gedreht, dass die Flachseite senkrecht zu Rändern der Solarmodule verläuft, wodurch der Kopf die Ränder beider angrenzender Solarmodule übergreift. Zur Befestigung nur eines Solarmoduls wird der Kopf des Befestigers so gedreht, dass die Flachseite parallel zum Rand des Solarmoduls verläuft und dem Solarmodul abgewandt ist, so dass der Kopf des Befestigers den Rand des Solarmoduls mit seinem kreisbogenförmigen Rand der Flachseite gegenüber übergreift. Dieser Befestiger hat den Vorteil, dass er sowohl für die Befestigung zweier angrenzender Solarmodule als auch nur eines Solarmoduls auf einer Seite des Befestigers geeignet ist.

Aufgabe der Erfindung ist, einen einfach handhabbaren Befestiger für Solarmodule vorzuschlagen, der gleichermaßen für die Befestigung zweier angrenzender Solarmodule als auch nur eines Solarmoduls geeignet ist.

Diese Aufgabe wird erfindungsgemäß durch die Merkmale des Anspruchs 1 gelöst. Der erfindungsgemäße Befestiger für Solarmodule weist eine Pratze mit drei Auflagen zum Auflegen und zum Niederspannen von Solarmodulen auf eine Montageschiene auf. Zwei der Auflagen befinden sich aneinander gegenüber und dienen zum Auflegen auf zwei angrenzende Solarmodule, zwischen denen der Befestiger angeordnet ist bzw. wird. Die beiden gegenüberliegenden Auflagen sind insbesondere parallel zueinander ausgerichtet. Die dritte Auflage ist quer, also insbesondere im Wesentlichen senkrecht zu den beiden gegenüberliegenden Auflagen angeordnet und dient zur Befestigung nur eines Solarmoduls auf einer Seite des Befestigers. Es kommt nicht darauf an, dass die Auflagen exakt quer zueinander sind, sondern darauf, dass sich die Pratze zwischen zwei angrenzenden Solarmodulen so anordnen lässt, dass die beiden gegenüberliegenden Auflagen auf angrenzende Ränder der Solarmodule auflegbar und die Solarmodule dadurch auf eine Montageschiene, auf der sie aufliegen, niederspannbar sind, und dass zur Befestigung nur eines Solarmoduls die dritte Auflage auf dessen Rand auflegbar und das Solarmodul auf eine Montageschiene, auf der es aufliegt, niederspannbar ist. Wegen der beiden gegenüberliegenden und der dritten Auflage quer zu den gegenüberliegenden Auflagen kann die Pratze des erfindungsgemäßen Befestigers auch als dreiseitige Pratze bezeichnet werden.

Außerdem weist der erfindungsgemäße Befestiger ein Hammerkopfelement auf, das länger als breit ist, weswegen es auch als länglich bezeichnet werden kann. Es ist nicht breiter als ein Längsschlitz einer Montageschiene, so dass das Hammerkopfelement längs zur Montageschiene ausgerichtet durch den Längsschlitz in die Montageschiene einbringbar ist. Das Hammerkopfelement ist länger als der Längsschlitz der Montageschiene breit ist, so dass es durch eine Drehung in Hintergriff in der Montageschiene bringbar ist. Das Hammerkopfelement des erfindungsgemäßen Befestigers wird durch eine Drehung um 45° in beliebiger Richtung in Hintergriff in der Montageschiene gebracht. Es ist drehfest und abstandsveränderlich mit der Pratze verbunden, so dass sich das Hammerkopfelement durch Drehung der Pratze in Hintergriff in der Montageschiene bringen lässt. Das Hammerkopfelement verläuft diagonal zu bzw. in einem Winkel von ungefähr 45° zu den Auflagen der Pratze. Wird das Hammerkopfelement zum Einbringen in die Montageschiene in deren Längsrichtung ausgerichtet, verlaufen die Auflagen der Pratze unter Winkeln von 45° zur Montageschiene. Eine Drehung des Befestigers um 45° bringt das Hammerkopfelement in Hintergriff in der Montageschiene und richtet die Auflagen längs und quer zur Montageschiene aus. Auf diese Weise lassen sich die beiden gegenüberliegenden Auflagen der Pratze parallel zu Rändern zweier angrenzender Solarmodule ausrichten, deren Ränder quer zur Montageschiene verlaufen. Durch Drehung des Befestigers um 45° in entgegengesetzter Richtung lässt sich die eine Auflage, die quer zu den beiden gegenüberliegenden Auflagen ausgerichtet ist, parallel zu einem Rand eines an den Befestiger angrenzenden Solarmoduls ausrichten. Der erfindungsgemäße Befestiger eignet sich dadurch sowohl zur Befestigung zweier angrenzender Solarmodule, als auch zur Befestigung nur eines Solarmoduls auf einer Seite des Befestigers. Die Solarmodule können quer zu der Montageschiene, auf der sie aufliegen und auf die sie zur Befestigung mit dem Befestiger niedergespannt werden, angeordnet sein. Möglich ist auch eine Befestigung von Solarmodulen, deren Ränder parallel zur Montageschiene ausgerichtet sind und seitlich des Längsschlitzes auf der Montageschiene aufliegen. Die Erfindung ermöglicht eine einfache Befestigung des Befestigers in der Montageschiene, wahlweise durch eine Links- oder eine Rechtsdrehung um 45°. Es ist nicht wesentlich für die Erfindung, dass das Hammerkopfelement exakt diagonal bzw. exakt in einem Winkel von 45° zu den Auflagen der Pratze verläuft, sondern dass der Hammerkopf wahlweise durch eine Links- oder eine Rechtsdrehung in Hintergriff in der Montageschiene bringbar ist und dass durch die Drehung in der einen Richtung die gegenüberliegenden Auflagen quer zur Montageschiene und durch Drehung in entgegengesetzter Richtung die eine Aufnahme, die quer zu den beiden gegenüberliegenden Auflagen angeordnet ist, quer zur Montageschiene ausgerichtet werden.

Vorzugsweise sind die Auflagen mit der Pratze und damit miteinander einstückig.

Eine bevorzugte Ausgestaltung der Erfindung sieht eine kippsichere Führung der Pratze am Hammerkopfelement vor, und zwar kippsicher um eine Achse parallel zu der einen Auflage der Pratze quer zu den beiden gegenüberliegenden Auflagen. Diese Ausgestaltung der Erfindung verhindert ein Kippen der Pratze beim Niederspannen nur eines Solarmoduls auf einer Seite des Befestigers, wenn das Solarmodul mit der Pratze auf eine Montageschiene niedergespannt wird. Ein Kippmoment ergibt sich beim Niederspannen, weil die Auflage auf dem Rand des Solarmoduls aufliegt und eine Spannkraft außerhalb des Solarmoduls neben dessen Rand wirkt. Der dadurch bedingte Versatz zwischen einer Wirkungslinie der an der Pratze angreifenden Spannkraft und der Auflage auf dem Solarmodul bewirkt ein Kippmoment, dem die kippsichere Führung der Pratze am Hammerkopf entgegenwirkt. Weil die beiden gegenüberliegenden Auflagen auf zwei angrenzenden Solarmodulen aufliegen, entsteht bei deren Nutzung kein Kippmoment, weswegen eine kippsichere Führung der Pratze am Hammerkopfelement in dieser Richtung nicht notwendig, allerdings auch nicht ausgeschlossen ist.

Eine Weiterbildung der Erfindung sieht eine Schiebeführung für die kippsichere Führung der Pratze am Hammerkopfelement vor. Es handelt sich um eine einfache Möglichkeit einer kippsicheren Führung der Pratze am Hammerkopfelement.

Eine bevorzugte Ausgestaltung der Erfindung sieht eine Anlage beispielsweise in Form einer ebenen Anlagefläche des Befestigers an einem zugewandten Rand eines Solarmoduls vor. Die Anlage ist auf der Seite der einen Auflage quer zu den beiden gegenüberliegenden Auflagen vorgesehen, bei deren Nutzung das vorstehend beschriebene Kippmoment beim Niederspannen des Solarmoduls wirkt, das die Pratze bzw. den Befestiger vom Solarmodul weg kippt. Anlagen auf den Seiten der gegenüberliegenden Auflagen sind nicht ausgeschlossen. Die Anlage verläuft in einem spitzen Winkel zu einer Senkrechten zum Hammerkopfelement bzw. in einem spitzen Winkel zu einer Senkrechten zur Pratze bzw. deren Auflagen. Ein Scheitel des spitzen Winkels ist dem Hammerkopfelement zugewandt, der spitze Winkel öffnet sich also in Richtung der Pratze. Durch die Anlage des erfindungsgemäßen Befestigers im spitzen Winkel zur Senkrechten zum Hammerkopfelement bzw. zur Pratze wird erreicht, dass das Kippmoment, das durch das Niederspannen nur eines Solarmoduls auf einer Seite des Befestigers mit der einen Auflage quer zu den beiden gegenüberliegenden Auflagen, das den Befestiger schräg stellt, den Befestiger mit der Anlage in Anlage an den zugewandten Rand des Solarmoduls verbringt bzw. der Befestiger mit der Anlage im spitzen Winkel in Anlage an den Rand des Solarmoduls gebracht werden kann. Einem Abrutschen des Befestigers vom Rand des Solarmoduls durch das Niederspannen des Solarmoduls auf eine Montageschiene wird entgegengewirkt, die Befestigung nur eines Solarmoduls auf einer Montageschiene ist verbessert.

Die Erfindung wird nachfolgend anhand eines in der Zeichnung dargestellten Ausführungsbeispiels näher erläutert. Es zeigen:

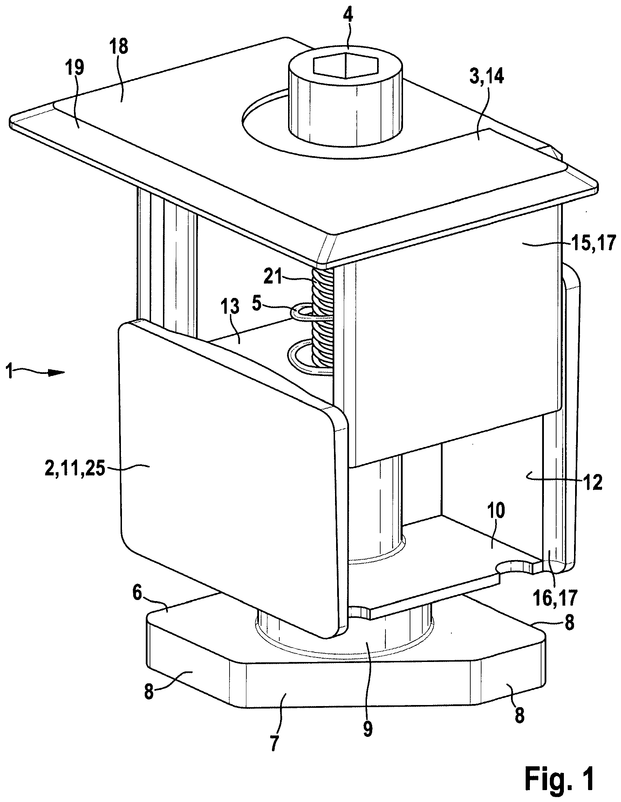

- Figur 1: einen Befestiger gemäß der Erfindung in perspektivischer Darstellung; und
- Figur 2: Verwendungen des Befestigers aus Figur 1.

Der in der Zeichnung dargestellte, erfindungsgemäße Befestiger 1 umfasst vier Teile, er weist ein Grundteil 2, eine Pratze 3, eine Spannschraube 4 und eine Schraubendruckfeder 5 auf.

Das Grundteil 2 weist ein plattenförmiges, längliches Hammerkopfelement 6 auf, das länger als breit ist. In Draufsicht ist das Hammerkopfelement 6 sechseckig, es weist zwei parallele Längsseiten 7 auf, die durch rechtwinklig abgewinkelte Querseiten 8, in Winkeln von 45° zu den Längsseiten 7 verbunden sind. Ecken der Querseite 8 sind außermittig jeweils in entgegengesetzter Richtung versetzt, so dass das Hammerkopfelement 6 in Draufsicht ein punktsymmetrisches Sechseck bildet.

Das Hammerkopfelement 6 ist einstückig über einen kurzen Zylinder 9 mit dem Grundteil 2 verbunden. Das Grundteil 2 weist eine rechteckige Bodenplatte 10 parallel zum Hammerkopfelement 6 auf, von der einstückig und rechtwinklig zwei zueinander parallele Seitenwände 11, 12 nach oben, d.h. vom Hammerkopfelement 6 weg abstehen. Von einer Seite gesehen bildet die Bodenplatte 10 mit den beiden Seitenwänden 11, 12 ein U. Die Seitenwände 11, 12 sind verbunden durch einen Sattel 13 mit einem T-förmigen Profil, der die Seitenwände 11, 12 und die Bodenplatte 10 einstückig aussteift. Der Sattel 13 weist ein Mittelloch mit einem in der Zeichnung nicht sichtbaren Innengewinde auf, in das die Spannschraube 4 eingeschraubt ist. Die Bodenplatte 10 verläuft in einem Winkel von 45° zu den Längsseiten 7 des Hammerkopfelements 6.

Die Pratze 3 weist eine rechteckige Platte 14 auf, die parallel zur Bodenplatte 10 und zum Hammerkopfelement 6 des Grundteils 2 ausgerichtet ist. Von der Platte 14 stehen zwei rechteckige, plattenförmige Schenkel 15 parallel zueinander und senkrecht zur Platte 14 nach unten, d.h. in Richtung der Bodenplatte 10 des Grundteils 2 ab. Die Schenkel 15 sind einstückig mit der Platte 14. die Schenkel 15 sind senkrecht zu den Seitenwänden 11, 12 des Grundteils 2 angeordnet und greifen zwischen diese. An einander zugewandten Innenseiten ihrer zur Bodenplatte 10 senkrechten Ränder weisen die Seitenwände 11, 12 des Grundteils 2 gerundete Stufen 16 auf, die sich entlang der Ränder der Seitenwände 11, 12 erstrecken, also senkrecht zur Bodenplatte 10 und in denen die Schenkel 15 der Pratze 3 senkrecht zur Bodenplatte 10 und zum Hammerkopfelement 6 verschiebbar geführt ist. Die Schenkel 15 und die gerundeten Stufen 16 bilden eine Schiebeführung 17, mit der die Pratze 3 senkrecht zum Hammerkopfelement 6 verschiebbar geführt ist. Durch die Schiebeführung 17 ist die Pratze 3 drehfest und abstandsveränderlich mit dem Hammerkopfelement 6 verbunden.

Die Platte 14 steht an drei Seiten über die Schenkel 15 über, wodurch drei Auflagen 18, 9 der Pratze 3 gebildet sind. Zwei der Auflagen 18 liegen einander gegenüber, die dritte Auflage 19 verläuft quer zu den beiden gegenüberliegenden Auflagen 18. An ihren Unterseiten weisen die Auflagen 18, 19 Riffelungen 20 parallel zu ihren Rändern, d.h. parallel zu Rändern der rechteckigen Platte 14 der Pratze 3 auf.

Die Platte 14 weist ein Loch auf, durch das die Spannschraube 4 gesteckt ist. Die Schraubendruckfeder 5 ist auf einem Schaft 21 der Spannschraube 4 angeordnet, sie drückt die Pratze 3 vom Sattel 13 des Grundteils 2 ab.

Der Befestiger 1 dient zur Befestigung von plattenförmigen Solarmodulen 22, die auch als Solarpaneele bezeichnet werden, an Montageschienen 23, auf denen die Solarmodule 22 aufliegen.

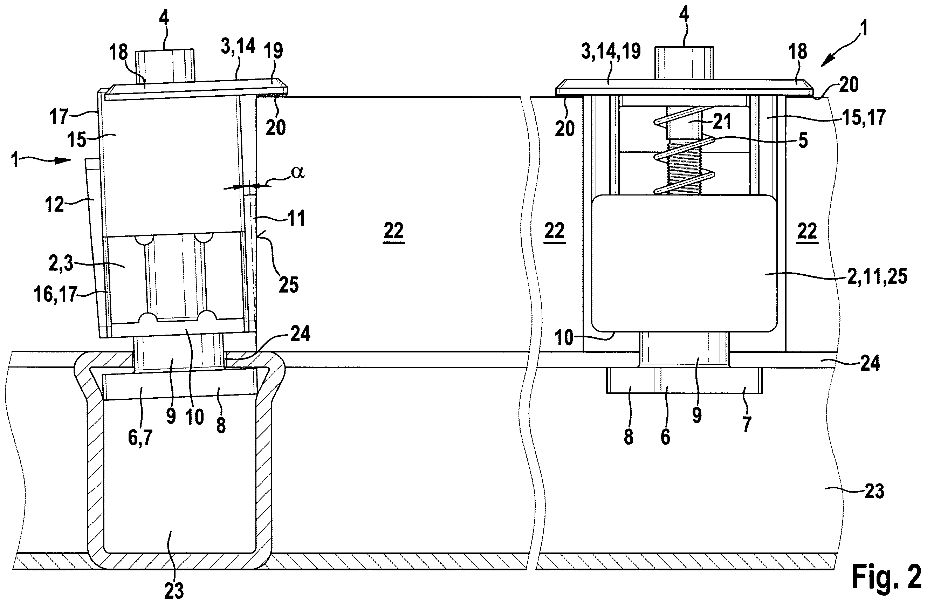

Die Montageschienen 23 sind hohle Rechteckprofile mit einem durchgehenden Längsschlitz 24 in einer hier als Oberseite bezeichneten Seite. Ein Querschnitt der Montageschiene 23 ist in Figur 2 links eingezeichnet. Das Hammerkopfelement 6 ist schmaler als der Längsschlitz 24 breit ist, es lässt sich in die Montageschiene 23 einbringen, wenn es in Längsrichtung der Montageschiene 23 ausgerichtet wird. Durch eine Links- oder Rechtsdrehung unter- bzw. hintergreift das Hammerkopfelement 6 die Montageschiene 23 seitlich des Längsschlitz 24, wodurch der Befestiger 1 an der Montageschiene 23 befestigt ist. Das Hammerkopfelement 6 ist so lang, dass es die Drehung aus der Längsrichtung nach links und nach rechts auf ca. 45° begrenzt, indem es innen an der Montageschiene 23 anstößt. Die Drehung des Hammerkopfelements 6 in der Montageschiene 23 kann an der Pratze 3 erfolgen, weil die Pratze 3 drehfest mit dem Grundteil 2 und damit auch mit dem Hammerkopfelement 6 ist, das einstückig mit dem Grundteil 2 ist. Die Auflagen 18, 19 der Pratze 3 verlaufen diagonal, d.h. in einem Winkel von 45° zum Hammerkopfelement 6. Ist das Hammerkopfelement 6 zum Einsetzen in die Montageschiene 23 längs zur Montageschiene 23 ausgerichtet, verlaufen die Auflagen 18, 19 der Pratze 3 folglich in Winkeln von 45° zur Montageschiene 23. Durch die Drehung um 45° nach links oder nach rechts, die das Hammerkopfelement 6 in Hintergriff in der Montageschiene 23 bringt, werden die Auflagen 18, 19 der Pratze 3 parallel bzw. quer zur Montageschiene 23 ausgerichtet. In dieser Drehstellung wird der Befestiger 1 an den Rand eines Solarmoduls 22 geschoben, der auf der Montageschiene 23 aufliegt. Eines oder zwei der Auflagen 18, 19 übergreifen den Rand des Solarmoduls 22 und lassen sich durch Drehen und Anziehen der Spannschraube 4 auf die Montageschiene 23 niederspannen und dadurch an der Montageschiene 23 befestigen.

Soll mit dem Befestiger 1 wie in Figur 2 links gezeichnet nur ein Solarmodul 22 befestigt werden, wird der Befestiger 1 so gedreht, dass die eine Auflage 19, die quer zu den beiden gegenüberliegenden Auflagen 18 angeordnet ist, dem Solarmodul 22 zugewandt wird. Sollen, wie in Figur 2 rechts gezeichnet, zwei Solarmodule 22 mit dem Befestiger 1 befestigt werden, wird der Befestiger 1 umgekehrt gedreht, so dass die beiden gegenüberliegenden Auflagen 18 parallel zu einem zugewandten Rand der Solarmodule 22 verlaufen. Der Befestiger 1 wird an den Rand eines der beiden Solarmodule 22 geschoben und das zweite Solarmodul 22 wird an den Befestiger 1 geschoben, so dass sich der Befestiger 1 zwischen den beiden Solarmodulen 22 befindet, die durch Drehen und Festziehen der Spannschraube 4 auf die Montageschiene 23 niedergespannt werden können.

Mit dem Befestiger 1 können nicht nur, wie dargestellt, Solarmodule 22 befestigt werden, die die Montageschiene 23 quer überspannen, sondern es können auch ebenso ein oder zwei Solarmodule 22 befestigt werden, deren Ränder in Längsrichtung der Montageschiene 23 verlaufen und seitlich des Längsschlitz 24 auf der Montageschiene 23 aufliegen. Die als Oberseite bezeichnete Seite der Montageschiene 23 ist deswegen breiter als der Befestiger 1. Die Riffelungen 20 an den Unterseiten der Auflagen 18, 19 verbessern einen Halt der Pratze 3 auf dem Rand der Solarmodule 22.

Das Hammerkopfelement 6 befindet sich außerhalb der Solarmodule 22 neben deren Rändern, die Auflagen 18, 19 weisen einen Versatz zum Hammerkopfelement 6 auf. Deswegen bewirkt das Niederspannen mit der Spannschraube 4 ein Kippmoment des Befestigers 1 vom Rand des Solarmoduls 22 weg, wenn der Befestiger 1, wie in Figur 2 links gezeigt, nur ein Solarmodul 22 auf einer Seite des Befestigers 1 niederspannt. Der Befestiger 1 weist deswegen eine Anlage 25 auf der Seite auf, auf der sich die eine Auflage 19 befindet, die quer zu den beiden gegenüberliegenden Auflagen 18 angeordnet ist. Im Ausführungsbeispiel ist die Anlage 25 eine ebene Fläche, nämlich eine Außenseite der Seitenwand 11 des Grundteils 2, die sich auf der Seite befindet, auf der sich die eine Auflage 19 der Pratze 3 befindet, die quer zu den beiden gegenüberliegenden Auflagen 18 angeordnet ist. Die Anlage 25 weist einen spitzen Winkel α zu einer Senkrechten zum Hammerkopfelement 6 und zur Platte 14 der Pratze 3 auf, wobei ein Scheitel des Winkels α dem Hammerkopfelement 6 zugewandt und eine offene Seite des spitzen Winkels α der einen Auflage 19 der Pratze 3 zugewandt ist. Im Ausführungsbeispiel beträgt der spitze Winkel α 2°. Der spitze Winkel α der Anlage 25 ermöglicht eine plane Anlage am Rand des Solarmoduls 22, wenn das durch das Niederspannen bewirkte Kippmoment den Befestiger 1 etwas vom Rand des Solarmoduls 22 wegkippt. Der Halt des Befestigers 1 am Solarmodul 22 ist verbessert, die Gefahr eines Abrutschens der Auflage 19 vom Rand des Solarmoduls 22 wegen des durch das Niederspannen bewirkten Kippmoments ist verringert.

Die Schiebeführung 17 der Pratze 3 am Grundteil 2 führt die Pratze 3 kippsicher gegen ein Kippen um eine Achse parallel zu der einen Auflage 19 am Grundteil 2. Die Pratze 3 ist somit kippsicher gegen das Moment, das das Niederspannen nur eines Solarmoduls 22 bewirkt, am Grundteil 2, geführt.

### Bezugszeichenliste

### Befestiger für Solarmodule

- 1: Befestiger
- 2: Grundteil
- 3: Pratze
- 4: Spannschraube
- 5: Schraubendruckfeder
- 6: Hammerkopfelement
- 7: Längsseite
- 8: Querseite
- 9: Zylinder
- 10: Bodenplatte
- 11: Seitenwand
- 12: Seitenwand
- 13: Sattel
- 14: Platte
- 15: Schenkel
- 16: Stufe
- 17: Schiebeführung
- 18: Auflage
- 19: Auflage
- 20: Riffelung
- 21: Schaft
- 22: Solarmodul
- 23: Montageschiene
- 24: Längsschlitz
- 25: Anlage
- α: Winkel der Anlage 25

## Patentansprüche

1. Befestiger für Solarmodule, mit einer Pratze (3) mit zwei gegenüberliegenden Auflagen (18) zum Auflegen auf und zum Niederspannen von Solarmodulen (22) und einer Auflage (19) quer zu den beiden gegenüberliegenden Auflagen (18) und mit einem Hammerkopfelement (6), das länger als breit ist, so dass es längs ausgerichtet zu einer Montageschiene (23) in die Montageschiene (23) einbringbar ist und durch eine Drehung in Hintergriff in der Montageschiene (23) bringbar ist, **dadurch gekennzeichnet, dass** die Pratze (3) drehfest und abstandsveränderlich mit dem Hammerkopfelement (6) verbunden ist, dass das Hammerkopfelement (6) durch eine Drehung um 45° in Hintergriff in der Montageschiene (23) bringbar ist und dass das Hammerkopfelement (6) diagonal zu den Auflagen (18, 19) der Pratze (3) verläuft.

2. Befestiger nach Anspruch 1, **dadurch gekennzeichnet, dass** die Auflagen (18, 19) mit der Pratze (3) einstückig sind.

3. Befestiger nach Anspruch 1 oder 2, **dadurch gekennzeichnet, dass** die Pratze (3) kippsicher gegen Kippen um eine Achse parallel zu der einen Auflage (19) quer zu den beiden gegenüberliegenden Auflagen (18) am Hammerkopfelement (6) geführt ist.

4. Befestiger nach Anspruch 3, **dadurch gekennzeichnet, dass** der Befestiger (1) eine Schiebeführung (17) für die Pratze (3) am Hammerkopfelement (6) aufweist.

5. Befestiger nach einem der vorhergehenden Ansprüche, **dadurch gekennzeichnet, dass** der Befestiger (1) eine Anlage (25) zur Anlage an einem Rand eines Solarmoduls (22) auf der Seite der einen Auflage (19) quer zu den beiden gegenüberliegenden Auflagen (18) aufweist, die in einem spitzen Winkel α zu einer Senkrechten zum Hammerkopfelement (6) bzw. zu einer Senkrechten zur Pratze (3) verläuft, wobei ein Scheitel des spitzen Winkels α dem Hammerkopfelement (6) zugewandt ist.

## Claims

1. Fastener for solar modules, with a clamping element (3) having two oppositely located bearing surfaces (18) for placing on and for clamping down solar modules (22) and having a bearing surface (19) arranged transversely with respect to the two oppositely located bearing surfaces (18), and with a hammerhead element (6) which is longer than it is wide, so that, when aligned longitudinally with respect to a mounting rail (23), it can be introduced into the mounting rail (23) and, by rotation, brought into engagement behind the mounting rail (23), **characterised in that** the clamping element (3) is joined to the hammerhead element (6) so as to be rotatable therewith and adjustable in its distance therefrom; the hammerhead element (6) can be brought into engagement behind the mounting rail (23) by rotation through 45°; and the hammerhead element (6) runs diagonally with respect to the bearing surfaces (18, 19) of the clamping element (3).

2. Fastener according to claim 1, **characterised in that** the bearing surfaces (18, 19) are integral with the clamping element (3).

3. Fastener according to claim 1 or 2, **characterised in that** the clamping element (3) is guided on the hammerhead element (6) so as to be resistant to tilting about an axis parallel to the one bearing surface (19) arranged transversely with respect to the two oppositely located bearing surfaces (18).

4. Fastener according to claim 3, **characterised in that** the fastener (1) has a sliding guide means (17) for the clamping element (3) on the hammerhead element (6).

5. Fastener according to any one of the preceding claims, **characterised in that** the fastener (1) has a contact surface (25) for contact with an edge of a solar module (22) on the side of the one bearing surface (19) arranged transversely with respect to the two oppositely located bearing surfaces (18), which contact surface runs at an acute angle α with respect to a perpendicular to the hammerhead element (6) or with respect to a perpendicular to the clamping element (3), wherein the vertex of the acute angle α faces towards the hammerhead element (6).

## Revendications

1. Dispositif de fixation pour modules solaires, avec une patte de fixation (3) dotée de deux supports opposés (18) destinés à supporter et à fixer par serrage des modules solaires (22), et d'un support (19) perpendiculaire aux deux supports opposés (18), et avec un élément (6) en tête de marteau qui est plus long que large, de sorte qu'il peut être introduit dans un rail de montage (23) en étant orienté longitudinalement par rapport au rail de montage (23), et amené par une rotation en prise arrière dans le rail de montage (23), **caractérisé en ce que** la patte de fixation (3) est relié à l'élément (6) en tête de marteau en solidarité de rotation et avec une distance mutuelle variable, **en ce que** l'élément (6) en tête de marteau peut être amené en prise arrière dans le rail de montage (23) par une rotation de 45°, et **en ce que** l'élément (6) en tête de marteau s'étend en diagonale par rapport aux supports (18, 19) de la patte de fixation (3).

2. Dispositif de fixation selon la revendication 1, **caractérisé en ce que** les supports (18, 19) sont d'un seul tenant avec la patte de fixation (3).

3. Dispositif de fixation selon la revendication 1 ou 2, **caractérisé en ce que** la patte de fixation (3) est guidée sur l'élément (6) en tête de marteau en étant empêchée de basculer autour d'un axe parallèle au support unique (19) perpendiculaire aux deux supports opposés (18).

4. Dispositif de fixation selon la revendication 3, **caractérisé en ce que** le dispositif de fixation (1) présente une coulisse (17) pour la patte de fixation (3) sur l'élément (6) en tête de marteau.

5. Dispositif de fixation selon l'une des revendications précédentes, **caractérisé en ce que** le dispositif de fixation (1) présente un appui (25) pour l'application contre un bord d'un module solaire (22) sur le côté du support unique (19). perpendiculaire aux deux supports opposés (18), appui qui s'étend sous un angle aigu α par rapport à une normale à l'élément (6) en tête de marteau ou encore à une normale à la patte de fixation (3), sachant que le sommet de l'angle aigu α est tourné vers l'élément (6) en tête de marteau.
